# EUROPEAN PATENT SPECIFICATION

(11) **EP 2 894 997 B1**
(45) Date of publication and mention of the grant of the patent: **20.01.2016**
(21) Application number: 13803225.5
(22) Date of filing: 05.09.2013
(51) Int. Cl.: A21D 13/00, A23G 3/54, A23G 3/34, A23G 3/40, A23L 1/164

(54) **GRABBLE SNACK BALLS WITH A COOKIE TASTE**
SNACKKUGELN ZUM AUFGREIFEN MIT KEKSGESCHMACK
BOULES D'ENCAS AYANT UN GOÛT DE BISCUIT

(30) Priority: 13.09.2012 BE 201200609
(43) Date of publication of application: 22.07.2015
(73) Proprietor: LOTUS BAKERIES BELGIË, 9971 Lembeke (BE)
(72) Inventor: VANDER STICHELE, Jan, B-9830 Sint-Martens-Latem (BE); VAN PARYS, Els, B-9850 Nevele (BE)
(74) Representative: Gevers Patents
(86) International application number: PCT/IB2013/058309
(87) International publication number: WO 2014/041466

(56) References cited:
- EP-A1- 1 925 212
- WO-A1-2010/041157
- WO-A2-2010/103483
- DE-U1-202005 010 976

## Description

### FIELD OF THE INVENTION

The present invention relates to confectionary articles which may serve as a snack food element. More particularly, the invention relates to grabble snacks, i.e. small snack articles which may be provided, either individually or packed in group, which may be grabbed or grabbled as separate elements from a bowl or bag, and which may then be brought to the mouth, one at a time, possibly with a few together.

### BACKGROUND OF THE INVENTION

Grabble snacks are a prized consumer product in today's society. Their attractiveness is partly caused because they give the consumer something to do during less active moments, such as during aperitifs, or cinema, bar or pub visits. Typically, they should be perceived as separate articles by the consumer such that he as usual can grab them separately and bring them to the mouth.

They exist both in sweet and salty versions. Very well-known examples with a mostly salty taste are popcorn and potato chips. Famous examples with a mostly sweet taste are for example the products known as Smarties, or M&M's, which are offered in a wide range of colours or chocolate coloured balls which were introduced as "Energy Balls" in 1937, but are already known for decades as Maltesers.

Also the design to grabble snacks is important, and thereby it is often mentioned that obtaining rollable shapes, preferably spherical shapes, is difficult to achieve. The great advantage of a rollable shape is that it may be provided with a coating in a conventional glazing machine, also sometimes called dragee machine, or pan coating apparatus.

JP 2002-204678 describes how spherical takoyaki can be made, i.e. a chunck of food with grilled octopus pieces in it.

US3732109 and EP113056 describe so-called extrusion baking, whereby a water containing dough is extruded at high pressure and temperature, is immediately cut into flakes which are dried with hot air, after which they are ground. Then a syrup of sugar, brown sugar, honey, and water is added to the mixture, the result is pressed into a mould and then further dried. The obtained cookie is intended to be consumed with milk.

In many cases, small products are coated with several objectives.

WO2005/036975 describes how a complex chocolate shape is covered with a film on the basis of cellulose in order to make the chocolate dimensionally stable and heat-resistant such that it may be incorporated into a larger chocolate mould which is still being tempered.

GB 620 417 describes how a chocolate core is coated with a layer of sugar, whereby the product remains stable even during distribution to the consumer in the summer or in the tropics.

DE 202005010976 U1 discloses a bullet-shaped praline, of which the shape stems from a spherical hollow wafer sleeve composed of two halves, with therein a filling of a pasty fat cream composition with a suitable flavour, in which in one half a nut-like piece of pastry is inserted. The sleeve is then coated with a solid chocolate or chocolate-like material. In the sleeve further still granular material such as cookies crumbs may be processed.

GB 2126070 describes how a sandwich cookie with marsh mallow inner layer is first coated with a jelly on the basis of a lot of sugar and a binder, which solidifies upon cooling, and is subsequently coated with chocolate, such that the moisture content of the sandwich cookie is much better maintained, which is beneficial for the mechanical characteristics of the product.

EP 1172038 A2 describes how, in a so-called "panning process", or glaze coater or drum coater, pieces of cooky are first coated with a layer of milk chocolate, the outer layer thereof being subsequently reheated up to 27°C and subsequently being sprayed with intensely coloured edible flakes with a diameter of about 2 mm, which were first tempered, in order to preferably partially incorporate them into the outer layer. An additional standard glaze coating completes the product. The material of the edible flakes is non-melting, or has a melting point which is higher than the chocolate coating around the pieces of cooky. The material is preferably visually or organoleptically distinguishable from the rest of the product.

United States Patent 5,340,598 describes the production on an industrial scale of ball-shaped baked products, by extrusion of a dough into a sausage, cutting this into substantially spherical, cylindrical or rounded parts, which are subsequently baked while continuously being moved relative to the conveyor belt, upon which they are transported through the oven. In such a way round chocolate chip cookies are made with a diameter of about 25 mm, or spherical crackers, and then glazed with a coating based on sugar, chocolate or oil.

The products described above get their taste particularly from the sugar or the added flavourings which have been used in the filling or the coating, often present in the form of a chocolate layer or a chocolate filling, sometimes supplemented with pieces or a whole hazelnut. There where some crispiness is present, it will in some cases be brought by a form of pastry, such as for example the light core of the Malteser, which carries the chocolate outer coating. Thereby the amount of pastry may be sufficiently large to bring the sought-after crispiness, but it is typically too small to make an important contribution to the taste pattern. The convenient and conventional grabble snacks have indeed too small a volume and/or too small a weight to be able to deliver a clearly present baking taste to the consumer.

Yet the flavour inherent in cakes and which is assigned to the reaction products of the chemical reactions which occur during the baking process, such as the highly complex Maillard reaction, or the caramelization of sugars, is a taste which is very much sought-after and which is strongly appreciated by the user. The baking taste, however, is not easy to concentrate, in order to obtain it as the main flavour in a grabble snack. To provide this flavour experience one usually resorts to entire cookies, which are significantly too large to serve as grabble snacks. There where grabble snacks are still offered today, they are usually salted and very dry.

The large and still growing popularity of these grabble snacks reflects a continuous demand for further expansion of the flavours, with which such grabble snacks are offered. There is also still a need for a possibility to offer a grabble snack of which the taste less explicitly based on sugar and/or chocolate. There still remains a need for a combination of baking taste with other flavours such as sweet and/or fat in a grabble snack.

The present invention has for its object to avoid or at least alleviate the problems described above, and/or generally to provide in improvements.

### SUMMARY OF THE INVENTION,

According to the invention, there is provided a food product suitable for use as grabble snack, its use, and a method for its production as defined in any of the claims attached hereto.

The invention provides more particularly a food product which is suitable as a grabble snack, and which consists of
a) a light and crunchy, substantially rollable core which is baked from a dough on the basis of grain, water, rising agent and optionally further flavourings such as salt, sugar and added fats,
   this core at least partially being surrounded with
b) a coating on the basis of finely ground cookies, and a fat phase, wherein at most 10%wt of the particles of the ground cookies have a particle size which is greater than 100 µm, and the fat phase has a solid fat content (SFC) at 20°C of at least 30 weight% and a solid fat content at 35°C of at most 15 weight%,
wherein the core has a density of at most 900 kg/m³.

Because the core, as prescribed, is baked as such, the core is a substantially solid mass. It is not a part still to be composed of several elements of different origin, substance, and flavours. This means that the core may be produced very easily, even if the core consists of two approximately half-rollable forms, as discussed later. The core according to the present invention is much simpler to manufacture than the one from DE 202005010976 U1, which consists of a wafer entity or wafer housing formed by two very thin half shells which together form a sphere, and which contains a filling in which a nut-like piece of pastry is put.

An additional advantage is that the baked core, if given a similar taste as the ground cookies which are incorporated into the coating, may enforce the cookie taste of the total product even more.

The inventors have found that the taste experience of the food product according to the present invention is provided to a large extent by the coating, more than by the core. The inventors have therefore found that the food product of the present invention, mainly due to the composition of the coating, succeeds in bringing a strongly pronounced cookie taste, much stronger than what may be achieved by a baked core only.

The inventors prefer to provide the core with a relatively low density, because in this way the core may appear quite light. This increases the crispiness of the core, but also allows that, upon the crunching in the mouth, the volume is significantly reduced, such that the taste, which in the product according to the present invention is substantially being provided by the coating, may come through more strongly.

The strong reduction of volume of the light core reduces with the consumer the feeling that the grabble snack represents a rich food supply, so s/he will less quickly obtain the feeling of being saturated and would reduce or stop the consumption of the grabble snack. Such a rapid satiety is typical for the conventional chocolates, especially in the celebrated and world famous "Belgian Chocolates". So this feature increases the experience of the present invention that the product is a grabble snack of a fairly innocent nature, and may be further consumed at will without serious consequences.

All this is a fundamental difference with the product described in DE 202005010976 U1, which is a praline of which the flavour comes from the bake-stable flavours with which the piece of pastry in the core is flavoured and which is embedded in the pasty fat-based filling, wherein said flavour may be further enhanced by appropriately aromatising the filling. Such conventional praline filling has typically a density of about 1.25 g/cm3, a density which is best kept at or close to this level in order not to let the flavour disappear. The wafer housing which surrounds the core is very thin, and is too small to make any taste contributions. Also, the cookie crumbs which may be added in the outer chocolate coating, serve only for a further decorative finishing of the product, but are not considered to affect the taste in any way.

The inventors have further found that the coating according to the present invention, in that it is a combination of finely ground cookies with a complementary fat phase, provides a by the consumer very much sought-after taste experience.

The inventors have further found that the characteristics of the fat phase in the coating of the product according to the present invention offer a particularly appreciated organoleptic experience, because a large portion of this fat phase melts when it heats up from ambient temperature to the body temperature in the mouth of the consumer. This melting requires a relatively large amount of heat for a relatively small temperature rise, which the food product then withdraws from its environment, i.e. from the tongue and the palate, such that the user experiences a refreshing feeling when processing the food product with the mouth. It is the intention of the inventors to approach with the coating the organoleptic pleasure which is known from the consumption of chocolate, preferably high quality chocolate.

Further, the inventors have found that the food product according to the present invention may be stored at room temperature for a relatively long period of time without the individual grabble snack elements exhibiting a tendency to stick to each other.

Furthermore, the inventors have found that the food product according to the present invention, during storage at room temperature during a relatively long period, shows little or no propensity for blooming. As a result, the useful life of the product is extended, and the storage conditions of the product thereby become less critical.

In another embodiment, the present invention provides a method for the production of a food product according to the present invention, which comprises the step of applying the coating on the core, preferably until the core is completely coated with the coating, preferably using the method known as glazing.

### DETAILED DESCRIPTION

The present invention will be described below, in certain embodiments, and with reference to certain drawings but the invention is not limited thereto, only by the claims. The drawings are only schematic and are non-limiting. In the drawings, some of the elements may be exaggeratedly shown and not drawn on scale for illustrative purposes. The dimensions, also relatively, in the drawings do therefore not necessarily correspond to how the invention is put into practice.

In addition, the terms, first, second, third, and so on, in the description and in the claims, are used for distinguishing between similar elements and not necessarily for describing a sequential or chronological order. These terms are interchangeable under appropriate circumstances and the embodiments of the invention may occur in sequences other than those described and illustrated herein.

Moreover, the terms top, bottom, over, under and the like in the description and in the claims, are used for descriptive purposes and not necessarily to denote relative positions. The terms so used are mutually interchangeable under appropriate circumstances and the embodiments of the invention may occur in sequences other than those described and illustrated herein.

The term "comprising" as used in the claims, should not be construed as limiting to the elements that are listed in context with it. It does not exclude that other elements or steps occur. It must be regarded as prescribing the presence of the features, integers, steps or components as prescribed, but does not preclude the presence or addition of one or more other features, integers, steps or components, or groups thereof.

Thus, the extent of "an object, comprising means A and B" can not be limited to an object which only consists of means A and B. It means that A and B are the only elements of interest for the object in connection with the present invention.

In the context of the present invention, the particle size of the ground cookies is preferably measured using a MasterSizer S long bed version 2.19 from the Malvern company, which is based on laser diffraction.

Within the context of the present invention, the term "rollable" refers to a form which either in the open so-called "pan" or in the closed so-called "drum" of a conventional drum coater or drum glazer, also referred to as "coating" mill, is able to sufficiently continue moving along the walls, such that the shape may absorb the coating over a substantial portion of its outer surface.

In an embodiment, the crushed cookies in the coating have a particle size distribution wherein at most 10 %wt of the particles have a particle size which is greater than only 90 µm, preferably only 80 µm, more preferably only 70 µm, and still more preferably only 60 µm. This brings the advantage that the coating provides a smoother appearance because of the limited presence of large particles.

In addition, the inventors prefer that not more than 90% of the particles have a particle size of less than 30 µm. More preferably, the particle size is somewhat larger, because larger particles are more effective in the transfer of the cookie flavour. Apparently too small particles fail to convey a cookie flavour of any significance. The inventors consider, therefore, the too small particles as rather useless ballast, and a loss of valuable material. Therefore, the inventors like to, preferably, have that the cookies are finely ground only until a maximum of 80% weight of the particles have a particle size of less than 30 µm, more preferably at most 50%, even more preferably at most 30%. The inventors find it even better if the specified maximum percentages of small particles refer to all particles having a particle size of less than 40 µm, preferably less than 50 µm.

Optionally the distribution is such that at most 50 %wt of the particles have a particle size of less than 5 µm, preferably 10 µm, more preferably 15 µm, even more preferably 20 µm, and most preferably even 25 µm. The inventors have found that with too many small particles a portion of the flavour experience fades. With this feature, the flavour intensity of the cookies in the coating is more pronounced, and thus also in the food product in its entirety.

In the context of the present invention, the solid fat content of a fat phase (SFC) is preferably determined by the measuring method which is known as IUPAC 1.250b, and which is called "Determination of solid content or fats, method for stabilized confectionery fats".

The inventors prefer that the fat phase of the coating has a solid fat content at 20°C of at least 35 weight%, preferably at least 40%, even more preferably at least 43%, yet more preferably at least 46%, preferably at least 48 weight%. Optionally, the fat phase of the coating has a solid fat content at 20°C of at most 65 weight%, preferably at most 60 %, even more preferably at most 55 weight %.

In addition, the inventors prefer that the fat phase of the coating has a solid fat content at 35°C of at most 15 weight%, preferably at most 10%, even more preferably at most 5.0 weight%, yet more preferably at most 3.0%, preferably at most 2.0%, even more preferably at most 1.5 weight%. Optionally, the fat phase of the coating has a solid fat content at 35°C of at least 0.5 weight%, preferably at least 0.7%, even more preferably at least 0.9%, even still more preferably at least 1.0%, preferably at least 1.3 weight% .

In an embodiment of the food product according to the present invention, the cookies which are finely ground are produced from a dough in which at least 10 weight% sugar is incorporated, preferably at least 15 weight%, more preferably at least 20 weight%, even more preferably at least 25 weight%, yet more preferably at least 30 weight%, and most preferably at least 35 weight%. This sugar is an important flavouring, also when in a partially caramelized form, and the increased presence of sugar in the cookies, and therefore in the coating, gives the food product a stronger flavour, which favourably affects the taste experience by the user.

In the context of the present invention, the fat phase of the coating also takes account of the fat present in the cookies, because during the mixing of the ground cookies with the rest of the fat usually an at least partial migration occurs of the fat present in the cookies to the continuous fat phase around the cookie particles.

In an embodiment of the food product according to the present invention, the cookies which are finely ground are spiced cookies.

Spiced cookies are characterized by a predominant taste of caramelised sugar. Preferably, this flavour of caramelised sugar is obtained without separately adding caramel or caramelized molten sugar.

Spiced cookies are further characterized by an additional baked flavour, which is brought by the products of the so-called Maillard reaction, also referred to as the non-enzymatic browning reaction, a reaction of sugars, especially reduced sugars, with amino acids, such as those which are bound in proteins. These products are produced under the influence of the heat during the baking process whereby both the sugars and the amino acids must be present. These products are therefore less or not present in caramel, made only from heated sugar, nor in the "speculaaskruiden", known especially in the Netherlands, while they are indeed present in the sugar-containing baked cookies preferred by the inventors.

The taste of caramelized cookies is very characteristic, and stands out from the many other known cookies. The taste of such speculoos or speculaas finds an ever broadening and increasing liking among consumers, and is becoming more and more sought-after in a wider range of consumer products offered in a geographically still expanding market. The flavour is usually more pronounced than those of other cookies, and is therefore especially suitable for consumption when drinking coffee. The inventors believe that this is because these types of cookies share with coffee some important aroma components. So is coffee also subject to a roasting or torrefaction treatment, such that during the production of coffee also the Maillard reaction and even to some degree the caramelisation reaction may occur, and hence may leave their products in the coffee.

The use of spiced or caramelized cookies (speculoos or speculaas) as the cookies in the coating will therefore bring a stronger flavour experience in comparison with most other available cookies, and this flavour experience is also very typical. In an embodiment of the food product according to the present invention, at least 95 % wt. of the particles of the ground cookies in the coating have a particle size of less than 100 µm, preferably at least 98% and more preferably at least 99% of the particles. By especially strongly limiting the extra large particles, the coating obtains an even smoother appearance, which improves the attractiveness of the food product to the consumer.

In an embodiment of the present invention, the core of the food product has a substantially spherical shape. Preferably, the food product itself has a substantial spherical shape. This shape increases the impression with the consumer that the food product is not just suitable as a grabble snack, but is primarily intended thereto. The spherical shape is even more inviting for being grabbled, and being scooped a few pieces at a time from a bowl or bag for being consumed. In this way, the form generates an idea of abundance, which is valued by the consumer when using sweets, because this usually occurs at a time when the consumer wants to treat himself or someone else.

In an embodiment of the present invention, the food product has a diameter from 5 to 30 mm, preferably from 7 to 27 mm, more preferably from 10 to 25 mm, even more preferably from 13 to 23 mm, yet more preferably from 16 to 21 mm. This size increases the impression with the consumer that the food product is not just suitable, but is primarily meant as grabble snack. This effect is even more pronounced with the spherical shape.

Herein, the diameter, such as of the food product or of the core, refers to the largest dimension of the food product which may be measured between two separate points of the food product.

In the food product according to the present invention, the core has a density of at most 900 kg/m³, preferably at most 800 kg/m3, more preferably at most 750 kg/m3, even more preferably at most 700 kg/m3, yet more preferably at most 600 kg/m3, and optionally at least. 100 kg/m3, preferably at least 200 kg/m3, more preferably at least 250 kg/m3, even more preferably at least 300 kg/m3, and yet more preferably at least 400 or even 500 kg/m3, preferably at least 550 kg/m3, more preferably at least 600 kg/m3, even more preferably at least 700 kg/m3. The inventors prefer, as has already been mentioned above, to provide the core with this density, because thereby the core is generally quite light, and yet not too light. This increases the crispiness of the core, but also allows that, upon the grinding in the mouth, the volume decreases significantly, without thereby disappearing completely, such that the flavour, which is mainly conveyed by the coating, may come through sufficiently strong or even more strongly.

Within the context of the present invention, the density of the core is preferably measured using the so-called sand method. In this method, the weight of the steel container is determined when it is empty, filled with water, and filled with sand. The density of the water is obtained from tables, or measured with a pycnometer. Thereby one may calculate the volume of the sample holder as well as the density of the sand. By then weighing the sample holder with a cookie inside it, and subsequently further filled with sand, the volume and the density of the cookie may be obtained from the different determined weights.

In an embodiment according to the present invention, the coating coats the entire core of the food product, hence the coating envelops the core in its entirety. This increases the aesthetic appearance of the food product, but prevents that the feel experience of the consumer may be offset by contacting any uncovered parts of the core.

In an embodiment according to the present invention, the coating has a thickness of at least 0.5 mm, preferably at least 0.6 mm, more preferably at least 0.7 mm, even more preferably at least 0.8 mm, yet more preferably at least 0.9 mm. The inventors have found that this thickness is necessary in order to obtain a sufficient covering of the core over the intended surface of the core, such that the above-mentioned drawbacks of an incomplete coverage may be avoided. The inventors have further found that a thicker coating also enhances the flavour experience, because the flavour is brought substantially by the coating.

Optionally, the coating of the food product according to the present invention has a thickness of at most 5.0 mm, preferably at most 4.5 mm, more preferably at most 4.0 mm, even more preferably at most 3.5 mm, and yet more preferably at most 3.0 mm. The inventors have found that in this way it is avoided that the food product would be too heavy in weight or too satisfying in taste experience for being considered a grabble snack. The risk of an excessive fat taste is thereby also reduced, which for many consumers would not be experienced as pleasant. By giving a too satisfying taste experience, the consumer obtains too fast the feeling of being saturated, so that either he will supersaturate, which may quickly afterwards cause himself inconveniences or he will reduce or stop the consumption of the grabble snack, which offsets the whole idea that the product is a grabble snack. This also reduces the use of fat ingredient, which is economically favourable for the producer.

In an embodiment according to the present invention, the coating of the food product complies with at least one of the following characteristics:
• comprising finely ground cookies in an amount of at least 35%wt, preferably at least 40 %wt, more preferably at least 50 %wt, even more preferably at least 55 %wt, preferably at least 60 %wt, more preferably at least 65 %wt, even more preferably at least 70 %wt, and optionally at most 80 %wt, preferably at most 78 %wt, more preferably at most 76 %wt, even more preferably at most 74 %wt, and preferably at most 72 %wt,
• comprising the fat phase in an amount of at least 30%wt preferably at least 35 %wt, more preferably at least 38 %wt, even more preferably at least 40 %wt, and optionally at most 60 %wt, preferably at most 55 %wt, more preferably at most 50 %wt, even more preferably at most 45 %wt, and preferably at most 43 %wt,
• the fat phase has a triglyceride composition with therein at least 50 weight% of symmetrical triglycerides of the type POP, POSt or StOSt, where P stands for palmitic acid, O for oleic acid and St for stearic acid, preferably at least 55% and more preferably, at least 58%, and optionally at most 85 weight%, preferably at most 70%, more preferably at most 65%, and yet more preferably at most 63% and wherein preferably the ratio of these three triglycerides is such that the composition corresponds to a point which lies within the area delimited by the dotted line which indicates, in the ternary diagram shown on figure 6.17 on page 231 of the textbook ISBN 0-9531949-4-9 by R.E. Timms, "Confectionary Fats handbook", The Oily Press, 2003, the area of the triglyceride mixtures having the same tempering characteristics as cocoa butter itself, and
• comprises at least one additional ingredient which is selected from the group consisting of emulsifiers, preferably lecithin and then preferably in a concentration in the range from 0.1 to 1.0 weight%, more preferably 0.2 to 0.6%, even more preferably 0.3 to 0:5 weight%, and typically about 0.25 weight%, cocoa powder, sugar, milk powder, and
wherein the percentages relate to the total weight of the coating, unless stated differently.

The finely ground cookies in the coating are an important flavouring because sugar is introduced with the cookies, and therefore necessarily also the taste of caramelised sugar, but also the baking taste is thereby provided, for which the products of the Maillard reaction are essentially responsible, i.e. the chemical reaction between an amino acid and a reducing sugar. The inventors prefer to use a higher amount of finely ground cookies because thereby the taste experience is enhanced. However, the inventors have also kept on an upper limit, because there has to be sufficient room for the fat phase and for any other ingredients in the formulation of the coating.

The coating preferably has the prescribed minimum amount of fat phase, in which, as already mentioned above, also the fat which is contributed by the finely ground cookies is counted, in order to obtain a sufficiently continuous fat phase such that the coating composition may be melted and may be pumped as a fluid. Because the fat is also a flavouring, a higher fat content also contributes to the taste experience. An upper limit is here also preferably maintained, because at a too high fat content, the cookie content drops too low and the flavour contribution of the cookies declines.

The inventors prefer to limit the proportion of unsaturated fatty acids, and especially of omega-3 unsaturated fatty acids, because they have found that these may adversely affect the tactile sensitivity and the gloss of the food product.

The inventors prefer that the fat phase has similar or even the same tempering characteristics as cocoa butter itself. To approach this, and preferably to achieve this, the inventors preferably use a sufficient amount of added fat in order to achieve the coating, which added fat is preferably cocoa butter itself or a cocoa butter equivalent (CBE), or even a composition slightly deviating therefrom, such that the total fat phase, with included therein also the quantity,and the nature of the fat which comes along with the finely ground cookies, has similar or even the same tempering characteristics as cocoa butter itself.

The coating composition is preferably obtained by the method as described in BE 1018524A3 or WO 2010/041157A1.

Preferably when grinding, the cookies have a water content of at most 5.0 weight%, preferably at most 3.0 weight%, and more preferably at most 1.0 weight%. The amount of water in the cookies is kept as low as possible, on the one hand in order to improve the smoothness and creaminess of the coating and on the other hand in order to ensure that the mixture of ground cookies and fat is and remains readily processable, especially during a possibly second step wherein a further refinement of the grain is carried out. Due to the low water content the coating composition also has a long shelf life which is typically at least one year, with a minimum risk of oiling out and a good preservation of the cookie flavour. These advantages are described in more detail in BE 1018524A3 and WO 2010/041157A1.

In an embodiment, the triglycerides in the fat phase of the coating according to the present invention are at least partially present in crystalline form, preferably at least in part as so-called beta-prime crystals, more preferably as crystals of the type V or higher. This brings the benefit of a hard and snappy outer layer, which is maintained at room temperature, and reduces the risk of "blooming". The presence of the crystallized form may be determined by "differential scanning calorimetry (DSC)" or with X-ray diffraction (XRD).

In an embodiment according to the present invention, the crystallized triglycerides in the fat phase of the coating are crystallized for at least 10 weight% in a crystal form which has at least the stability of the Beta-prime form, which is more stable than the alpha-form, but which may sometimes further convert to the even more stable Beta form, which is however less desirable because of a potentially less interesting mouthfeel. Preferably these crystals have a crystal form with a melting point of at least 27°C, more preferably in a crystalline form with a melting point of at least 30°C, or even at least 33°C Preferably, at least 20% by weight has this specified crystal form, more preferably at least 30 %, even more preferably at least 40 weight%. Thereby the more stable form w.r.t. temperature than the above named must be included in the quantity. By this specification, the coating becomes harder and snappier and approaches even closer the mouthfeel of a good quality chocolate.

In an embodiment of the food product according to the present invention, the coating is further coated with a glaze, preferably on the basis of food additive E414, which is acacia gum, carnauba wax and/or beeswax. The inventors have found that this improves and also retains longer the gloss of the coating, which makes the food product more attractive to the consumer.

In an embodiment of the food product according to the present invention, the coating is covered with a finishing layer, preferably a finishing layer on the basis of the feed additive with number E904 ( = shellac, but also called " confectioner's glaze"). The inventors have found that this finishing layer also contributes, to the gloss and reduces the finger sensitivity of the product. Preferably, this finishing layer is disposed on the glaze, as these two layers cooperate well to obtain in combination an even better effect than with only one of the two layers separately.

In an embodiment, the method according to the present invention also comprises the step tempering the coating composition prior to its application onto the core or with its application onto the core. This tempering step may represent a conventional tempering step, but the same effect of increasing the content of the in temperature more stable crystals, such as the beta-prime or the type V crystal form, may also be achieved by a treatment which simulates a tempering step. For example, the application of the coating may be carried out by a treatment in which the coated cores grate and rub against each other in such a way that the temperature of the applied coating is slightly increased, and that a partial remelting occurs of the least stable fat crystals. This step is then preferably followed by a post-cooling step, wherein again more of the fat recrystallizes out, but now preferably in a more temperature stable form, such as during a classic tempering step. The inventors prefer this embodiment with the simulated tempering above the separate inclusion of a classical tempering step, because it makes the process easier, and does not require any separate equipment.

In another embodiment, the method according to the present invention further comprises the step of applying a layer of glaze, preferably a glaze on the basis of food additive E414, also known as acacia gum, carnauba wax and/or beeswax, on the coating which covers the core, preferably by spraying a solution of the food additive, preferably while the food products to be treated are moving around in a rotating drum.

Applying a coating, a glaze, or finishing layer may be done with a technique known as glazing. EP 1172038 describes such technique of glazing, also called panning.

In another embodiment, the method according to the present invention further comprises the step of applying a finishing layer onto the coating which covers the core, preferably on the glaze layer, and preferably a finishing layer on the basis of the feed additive with number E904 and/or of sugar, such as icing, preferably by spraying a solution of the food additive and/or sugar, preferably while the food products to be treated are moving around in a rotating drum.

In another embodiment, the method according to the present invention further comprises the step of touching up the core before the application of the coating in order to improve the roller-shape thereof, preferably the spherical shape thereof. This offers the advantage that the core, and therefore the food product, is much more regular in shape, making it more attractive as a grabble snack, making it clearer for consumers that it is intended as a grabble snack.

In another embodiment of the method according to the present invention, the core is manufactured by the use of extrusion baking, preferably by extruding a water-containing dough under pressure and at elevated temperature, preferably at a temperature which is sufficiently high to allow a portion of the water in the dough to evaporate. By the technique of extrusion baking, vapour bubbles are formed which turn the baked core into a very light pastry with a low density. This keeps the total weight of the food product limited in relation to its volume, and increases for the same volume the weight portion of the coating, such that the flavour of the coating may come out stronger. The technique of extrusion baking is described in more detail in US 3732109 and in EP 113056.

In the extrusion baking, the inventors prefer to use for the core a water-containing dough which contains a quantity of water of at least 5 and at most 20 weight% on the basis of the entire dough, optionally in the form of milk, preferably skimmed milk.

In the embodiment, with the water containing dough for the core, this dough further preferably comprises a material which is based on grain, preferably flour, and a rising agent, preferably yeast or baking powder, possibly together with an amount of salt and/or sugar, and wherein relative to the total dough not more than 3 weight% of fat is added, and to which preferably even no added fat.

In another embodiment of the method according to the present invention, the core is produced by the baking of a quantity of dough in the shape of an approximately half or fully rollable form, such as a cylinder, but preferably a half or full spherical form, in the case of a fully cylindrical or spherical dough form, preferably in a baking plate or a baking tray with a suitably preformed base plate such that the dough shapes are kept in place during the baking by the force of gravity, wherein the dough preferably contains an amount of fat, on the basis of the total dough, of at least 10 weight%.

In this embodiment, wherein the core is manufactured by baking of a quantity of dough in the shape of approximately a half or a fully rollable form, the dough for the core contains preferably further a quantity of sugar, preferably of at least 20 weight%, more preferably at least 30 weight%, even more preferably at least 35 weight%, and optionally at most 50 weight%, preferably at most 45 weight%, more preferably at most 40 weight%. These concentrations are always expressed on the basis of the total dough. In this embodiment, the core is preferably baked at a sufficiently high temperature such that the sugar in the dough is at least partially caramelising. Thereby is the baking sufficiently thorough to generate enough of the so coveted products of the aforementioned Maillard reaction. In this way, the core may also take part in the taste experience, and if caramelized cookies are used in the coating, further enhance the taste thereof.

In another embodiment of the method according to the present invention, wherein the dough shape has approximately the shape of a fully rollable form, such as a cylinder or, preferably, a sphere, the rollable form, and preferably the spherical shape, of the dough for the core is manufactured by joining two dough drops which have approximately the form of half rollable shapes, such as cylinders or spheres, preferably by the cooperation of two formcylinders, each of which contributing one dough drop having a levelled off flat outer surface, and which dough drops are then pressed together pairwise, with their outer surface against each other, and whereafter the thus obtained fully rollable shape is pushed or thrown out of its mould in the formcylinder and is transferred to the baking plate or the baking tray. In this step, use may be made of the so-called rotodrop technology, or the doughform may be removed from its form in the formcylinder by a slight overpressure and/or by the force of gravity.

In another embodiment of the method according to the present invention, in which the dough shape for the core has approximately the shape of a half rollable form, such as a half cylinder but preferably a half sphere, the rollable form, and preferably the spherical shape, of the dough for the core is produced by the introduction of a quantity of dough in a mould having about a half rollable form, preferably a mould provided on a formcylinder, followed by the levelling flat of the amount of dough in the mould, removing or pushing out of the dough shape from the mould, and the transfer of the dough shape to the baking plate or the baking tray. In this embodiment, the inventors prefer preferably that the baked half-rollable form is mechanically touched up to round off the corners and to give the half-rollable shape a more rollable form, preferably a substantially cylindrical form, and still more preferably a substantially spherical form.

When touching up the core before the application of the coating, an amount of shavings arises. If the core is baked from a dough with an appropriate composition, roughly corresponding to or compatible with the cookies which are finely ground in order to be processed in the coating, the inventors prefer that at least a portion of the shavings of the touching up is used as raw material for the ground cookies in the coating of the food product. In this way, less waste is produced, and there is a better use of the deployed resources.

Suitable methods for manufacturing the baked, substantially rollable, preferably spherical cores according to the present invention are described, for example, iri JP 2002-204678, US 5340598, and in several of the documents referred to in this last publication.

The snacks according to the present invention may not only be consumed directly and as such by the consumer, but several amongst them may also find their way indirectly to the consumer, for example when they are used as decorative elements of larger food products, particularly bakery products such as pies or cakes.

In an embodiment, the present invention therefore also provides the use of a food product according to the present invention as grabble snacks, for example, for during a visit to the cinema or pub, after a meal, as a snack, a drink such as coffee or soda, as a decorative element of a pastry or confectionery product or an ice cream product, as children's snack, as sugar beans, or as a quick energy source before, after or during a sports effort.

## Claims

1. A food product which is suitable as a grabble snack, and which consists of
a) a light and crunchy, substantially rollable core which is baked from a dough on the basis of grain, water, rising agent and optionally further flavourings such as salt, sugar and added fats,
this core at least partially being surrounded with
b) a coating on the basis of finely ground cookies, and a fat phase, wherein at most 10%wt of the particles of the ground cookies have a particle size which is greater than 100 µm, and the fat phase has a solid fat content (SFC) at 20°C of at least 30 weight% and a solid fat content at 35°C of at most 15 weight%,
wherein the core has a density of at most 900 kg/m³.

2. The food product according to claim 1 wherein the cookies which are finely ground are made from a dough in which at least 10 weight% sugar has been incorporated.

3. The food product according to claim 1 or 2, wherein at least 95%wt of the particles of the ground cookies have a particle size less than 100 µm.

4. The food product according to any one of the preceding claims, wherein the coating complies with at least one of the following characteristics:
• comprising finely ground cookies in an amount of at least 35%wt and at most 80%wt, and
• comprising the fat phase in an amount of at least 30%wt and at most 60%wt,
• the fat phase has a triglyceride composition with therein at least 50 weight% of symmetrical triglycerides of the type POP, POSt or StOSt, where P stands for palmitic acid, O for oleic acid and St for stearic acid, and preferably wherein the ratio of these three triglycerides is such that the composition corresponds to a point which lies within the area delimited by the dotted line which indicates, in the ternary diagram shown on figure 6.17 on page 231 of the textbook ISBN 0-9531949-4-9 by R.E. Timms, "Confectionary Fats handbook", The Oily Press, 2003, the area of the triglyceride mixtures having the same tempering characteristics as cocoa butter itself, and
• comprises at least one additional ingredient which is selected from the group consisting of emulsifiers, preferably lecithin, cocoa powder, sugar, milk powder, and
wherein the percentages relate to the total weight of the coating, unless stated differently.

5. The food product according to any one of the preceding claims, wherein the coating is coated with a glaze, preferably on the basis of carnauba wax and/or beeswax.

6. The food product according to any one of the preceding claims, wherein the coating is coated with a finishing layer, preferably a finishing layer on the basis of the feed additive with number E904, also known as shellac.

7. A method for the production of a food product according to any one of the preceding claims which comprises the step of applying the coating onto the core, preferably until the core is completely covered with the coating, preferably in accordance with the method known as glazing.

8. The method according to the preceding claim which comprises the step of tempering the coating composition prior to its application onto the core.

9. The method according to claim 7 or 8 wherein the core is touched up before the application of the coating in order to improve the roller shape thereof, preferably the spherical shape thereof.

10. The method according to any one of the claims 7-9 wherein the core is manufactured by the use of extrusion baking, preferably by extruding a water-containing dough under pressure and at elevated temperature, preferably at a temperature which is sufficiently high to allow a portion of the water in the dough to evaporate.

11. The method according to any one of claims 7-10, wherein the core is manufactured by the baking of a quantity of dough in the shape of approximately a half or a fully rollable form, such as a cylinder, but preferably a half or full spherical form, in the case of a fully cylindrical or spherical dough form, preferably in a baking plate or a baking tray with a suitably preformed base plate such that the dough shapes are kept in place during the baking by the force of gravity, wherein the dough preferably contains an amount of fat, on the basis of the total dough, of at least 10 weight%.

12. The method according to claim 11 wherein the dough shape has approximately the shape of a fully rollable form, such as a cylinder or, preferably, a sphere, and wherein the rollable form, and preferably the spherical shape, of the dough for the core is manufactured by combining two dough drops which have approximately the form of half rollable shapes, such as cylinders or spheres, preferably by the cooperation of two formcylinders, each of which contributing one dough drop having a levelled off flat outer surface, and which dough drops are then pressed together pairwise with their outer surface against each other and whereafter the thus obtained fully rollable shape is pushed or thrown out of its mould in the formcylinder and is transferred to the baking plate or the baking tray.

13. The method according to claim 11 or 12 wherein the dough shape for the core has approximately the shape of a half rollable form, such as a half cylinder, but preferably a half sphere, and wherein this dough shape is obtained by the introduction of a quantity of dough in a mould having about a half rollable form, preferably a mould provided on a formcylinder, followed by the levelling flat of the amount of dough in the mould, removing or pushing out the dough shape from the mould, and the transfer of the dough shape to the baking plate or the baking tray.

14. The method according to the preceding claim, wherein the baked half rollable form is mechanically touched up to round off the corners and to give the half rollable shape a more rollable shape, preferably a substantially cylindrical form, and yet more preferably a substantially spherical shape.

15. The use of a food product according to any one of claims 1-6 as grabble sweets, for example for during a visit to the cinema or pub, after a meal, as a snack, accompanying a drink such as coffee or soda, as a decorative element of a confectionery product or an ice cream product, as children's snack, as sugar beans, or as a quick energy source before, after or during a sports effort.

## Patentansprüche

1. Ein Lebensmittelprodukt, das sich als Knabbersnack eignet und aus Folgendem besteht:
a) einem leichten und knusprigen, im Wesentlichen rollbaren Kern, der aus einem Teig auf Grundlage von Getreide, Wasser, Backtriebmittel und optional weiteren Aromastoffen wie Salz, Zucker und zugesetzten Fetten gebacken ist,
wobei dieser Kern zumindest teilweise durch
b) einen Überzug auf Grundlage von fein gemahlenen Keksen und einer Fettphase umgeben ist, wobei höchstens 10 Gew.% der Partikel der gemahlenen Kekse eine Partikelgröße haben, die mehr als 100 µm beträgt, und die Fettphase einen Festfettgehalt (FFG) bei 20 °C von mindestens 30 Gew.% und einen Festfettgehalt bei 35 °C von höchstens 15 Gew.% hat,
wobei der Kern eine Dichte von höchstens 900 kg/m³ hat.

2. Das Lebensmittelprodukt nach Anspruch 1, wobei die Kekse, die fein gemahlen sind, aus einem Teig hergestellt sind, in den mindestens 10 Gew.% Zucker eingearbeitet wurden.

3. Das Lebensmittelprodukt nach Anspruch 1 oder 2, wobei mindestens 95 Gew.% der Partikel der gemahlenen Kekse eine Partikelgröße haben, die weniger als 100 µm beträgt.

4. Das Lebensmittelprodukt nach irgendeinem der vorigen Ansprüche, wobei der Überzug zumindest eine der folgenden Eigenschaften erfüllt:
• fein gemahlene Kekse in einer Menge von mindestens 35 Gew.% und höchstens 80 Gew.% enthalten, und
• die Fettphase in einer Menge von mindestens 30 Gew.% und höchstens 60 Gew.% enthalten,
• die Fettphase hat eine Triglyzeridzusammensetzung mit darin mindestens 50 Gew.% von symmetrischen Triglyzeriden des Typs POP, POSt oder StOSt, wobei P für Palmitinsäure, O für Oleinsäure und St für Stearinsäure stehen, und wobei das Verhältnis zwischen diesen drei Triglyzeriden vorzugsweise so ist, dass die Zusammensetzung einem Punkt entspricht, der innerhalb des Bereichs liegt, der mit einer gepunkteten Linie abgegrenzt ist, was, im Ternärdiagramm aus Abbildung 6.17 auf Seite 231 des Handbuchs ISBN 0-9531949-4-9 von R.E. Timms, "Confectionary Fats handbook", The Oily Press, 2003, den Bereich der Triglyzeridmischungen anzeigt, die dieselben Härteeigenschaften wie Kakaobutter selbst haben, und
• zumindest einen zusätzlichen Bestandteil umfassen, welcher aus der Gruppe bestehend aus Emulgatoren, vorzugsweise Lecithin, Kakaopulver, Zucker, Milchpulver ausgewählt ist, und
wobei die Prozentsätze im Verhältnis zum Gesamtgewicht des Überzugs stehen, wenn nichts anderes angegeben ist.

5. Das Lebensmittelprodukt nach irgendeinem der vorigen Ansprüche, wobei der Überzug mit einer Glasur überzogen ist, vorzugsweise auf Grundlage von Karnaubawachs und/oder Bienenwachs.

6. Das Lebensmittelprodukt nach irgendeinem der vorigen Ansprüche, wobei der Überzug mit einer Oberflächenschicht überzogen ist, vorzugsweise eine Oberflächenschicht auf Grundlage des Zusatzstoffes mit Nummer E 904, auch als Schellack bekannt.

7. Ein Verfahren zur Herstellung eines Lebensmittelprodukts nach irgendeinem der vorigen Ansprüche, welches den Schritt des Auftragens des Überzugs auf den Kern umfasst, vorzugsweise bis der Kern völlig mit dem Überzug bedeckt ist, vorzugsweise nach dem als Glasieren bekannten Verfahren.

8. Das Verfahren nach dem vorigen Anspruch, welches den Schritt des Härtens der Überzugzusammensetzung vor deren Auftragen auf den Kern umfasst.

9. Das Verfahren nach Anspruch 7 oder 8, wobei der Kern nachgebessert wird, bevor der Überzug aufgetragen wird, um dessen Rollenform, vorzugsweise dessen Kugelform, zu verbessern.

10. Das Verfahren nach irgendeinem der Ansprüche 7 bis 9, wobei der Kern durch Einsatz von Extrusionsbacken hergestellt wird, vorzugsweise durch Extrudieren eines wasserhaltigen Teiges unter Druck und bei erhöhter Temperatur, vorzugsweise bei einer Temperatur, die ausreichend hoch ist, um ein Verdampfen eines Teils des Wassers im Teig zu ermöglichen.

11. Das Verfahren nach irgendeinem der Ansprüche 7 bis 10, wobei der Kern durch das Backen einer Teigmenge in Form von annähernd einer halb oder einer ganz rollbaren Form, wie ein Zylinder, aber vorzugsweise in einer halben oder ganzen Kugelform hergestellt wird, im Falle einer ganz zylindrischen oder kugeligen Teigform, vorzugsweise auf einem Backblech oder einer Backplatte mit einer geeignet vorgeformten Bodenplatte, sodass die Teigformen während des Backens durch die Schwerkraft an Ort und Stelle gehalten werden, wobei der Teig vorzugsweise eine Menge von Fett, auf Grundlage des Gesamtteiges, von mindestens 10 Gew.% enthält.

12. Das Verfahren nach Anspruch 11, wobei die Teigform annähernd die Form einer ganz rollbaren Form hat, wie ein Zylinder oder, vorzugsweise, eine Kugel, und wobei die rollbare Form, und vorzugsweise die Kugelform, des Teiges für den Kern hergestellt wird, indem zwei Teigtropfen zusammengefügt werden, die annähernd die Form halber rollbarer Formen haben, wie Zylinder oder Kugeln, vorzugsweise durch das Zusammenwirken von zwei Formzylindern, von denen jeder einen Teigtropfen beiträgt, der eine geglättete flache Außenfläche hat, und wobei die Teigtropfen dann paarweise mit ihrer Außenfläche gegeneinander gedrückt werden und wonach die so erhaltene ganz rollbare Form aus ihrem Formstück im Formzylinder heraus gedrückt oder geworfen wird und auf das Backblech oder die Backplatte verbracht wird.

13. Das Verfahren nach Anspruch 11 oder 12, wobei die Teigform für den Kern annähernd die Form einer halb rollbaren Form hat, wie ein halber Zylinder, aber vorzugsweise eine halbe Kugel, und wobei diese Teigform durch Einführen einer Teigmenge in ein Formstück erhalten wird, welches ungefähr eine halbe rollbare Form hat, vorzugsweise ein Formstück eingerichtet auf einem Formzylinder, gefolgt durch das Abflachen der Teigmenge im Formstück, Entfernen oder Herausdrücken der Teigform aus dem Formstück, und das Verbringen der Teigform auf das Backblech oder die Backplatte.

14. Das Verfahren nach dem vorigen Anspruch, wobei die gebackene halbe rollbare Form mechanisch nachgebessert wird, um die Ecken abzurunden und um der halben rollbaren Form eine stärker rollbare Form zu verleihen, vorzugsweise eine im Wesentlichen zylindrische Form, und noch besser eine im Wesentlichen kugelige Form.

15. Die Verwendung eines Lebensmittelprodukts nach irgendeinem der Ansprüche 1 bis 6 als Knabbersüßigkeit, zum Beispiel für während eines Besuchs im Kino oder in einer Gaststätte, nach einer Mahlzeit, als Snack, zu einem Getränk wie Kaffee oder Erfrischungsgetränk, als dekoratives Element eines Süßwarenprodukts oder eines Eiscremeprodukts, als Kindersnack, als Zuckerbohnen, oder als schnelle Energiequelle vor, nach oder während einer sportlichen Anstrengung.

## Revendications

1. Un produit alimentaire qui convient comme amuse-gueule et qui consiste en
a) un noyau léger et croquant, sensiblement roulable, qui est cuit à partir d'une pâte à base de céréale, d'eau, de levure et facultativement d'autres agents aromatisants tels que sel, sucre et matières grasses ajoutées,
ce noyau étant au moins en partie entouré
b) d'un enrobage à base de biscuits finement broyés et d'une phase grasse, dans lequel au plus 10 % en poids des particules de biscuits broyés ont une taille de particule qui est supérieure à 100 µm et la phase grasse a une teneur en matière grasse solide (SFC) à 20 °C d'au moins 30 % en poids et une teneur en matière grasse solide à 35 °C d'au plus 15 % en poids,
dans lequel le noyau a une masse volumique d'au plus 900 kg/m³.

2. Le produit alimentaire selon la revendication 1, dans lequel les biscuits qui sont finement broyés sont réalisés à partir d'une pâte dans laquelle au moins 10 % en poids de sucre a été incorporé.

3. Le produit alimentaire selon la revendication 1 ou 2, dans lequel au moins 95 % en poids des particules des biscuits broyés ont une taille de particule inférieure à 100 µm.

4. Le produit alimentaire selon l'une quelconque des revendications précédentes, dans lequel l'enrobage se conforme à au moins une des caractéristiques suivantes :
- comprenant des biscuits finement broyés dans une quantité d'au moins 35 % en poids et d'au plus 80 % en poids, et
- comprenant la phase grasse dans une quantité d'au moins 30 % en poids et d'au plus 60 % en poids,
- la phase grasse a une composition de triglycérides comprenant au moins 50 % en poids de triglycérides symétriques du type POP, POSt ou StOSt, où P représente de l'acide palmitique, O de l'acide oléique et St de l'acide stéarique, et dans laquelle le rapport de ces trois triglycérides est de préférence tel que la composition correspond à un point qui se situe dans la région délimitée par la ligne en pointillé qui indique, dans le diagramme ternaire montré sur la figure 6.17 à la page 231 du manuel ISBN 0-9531949-4-9 de R.E. Timms, « Confectionary Fats Handbook », The Oily Press, 2003, la région des mélanges de triglycérides ayant les mêmes caractéristiques de tempérage que le beurre de cacao lui-même, et
- comprend au moins un ingrédient additionnel qui est sélectionné dans le groupe consistant en émulsifiants, de préférence de la lécithine, en poudre de cacao, en sucre, en lait en poudre, et
les pourcentages étant en rapport avec le poids total de l'enrobage, sauf indication contraire.

5. Le produit alimentaire selon l'une quelconque des revendications précédentes, dans lequel l'enrobage est revêtu d'une glaçure, de préférence à base de cire de carnauba et/ou de cire d'abeille.

6. Le produit alimentaire selon l'une quelconque des revendications précédentes, dans lequel l'enrobage est revêtu d'une couche de finition, de préférence une couche de finition à base de l'additif alimentaire ayant le numéro E904, également connu en tant que gomme laque.

7. Un procédé de production d'un produit alimentaire selon l'une quelconque des revendications précédentes qui comprend l'étape consistant à appliquer l'enrobage sur le noyau, de préférence jusqu'à ce que le noyau soit complètement couvert avec l'enrobage, de préférence selon le procédé connu en tant que glaçage.

8. Le procédé selon la revendication précédente qui comprend l'étape consistant à tempérer la composition d'enrobage avant son application sur le noyau.

9. Le procédé selon la revendication 7 ou 8, dans lequel le noyau est retouché avant l'application de l'enrobage afin d'améliorer la forme de rouleau de celui-ci, de préférence la forme sphérique de celui-ci.

10. Le procédé selon l'une quelconque des revendications 7 - 9, dans lequel le noyau est réalisé en utilisant la cuisson-extrusion, de préférence en extrudant une pâte contenant de l'eau sous pression et à température élevée, de préférence à une température qui est suffisamment élevée pour permettre à une partie de l'eau dans la pâte de s'évaporer.

11. Le procédé selon l'une quelconque des revendications 7 - 10, dans lequel le noyau est réalisé par la cuisson d'une quantité de pâte dans la forme approximativement d'une moitié d'une forme roulable ou d'une forme entière roulable, telle qu'un cylindre, mais de préférence une moitié d'une forme sphérique ou une forme entière sphérique, dans le cas d'une forme de pâte complètement cylindrique ou sphérique de préférence dans une plaque de four ou une plaque à pâtisserie avec une plaque de base préformée de manière appropriée de façon que les formes de pâte soient maintenues en place pendant la cuisson par la force de gravité, dans lequel la pâte contient de préférence une quantité de matière grasse, sur la base du total de la pâte, d'au moins 10 % en poids.

12. Le procédé selon la revendication 11, dans lequel la forme de la pâte a approximativement la forme d'une forme entière roulable, telle qu'un cylindre, ou de préférence une sphère, et dans lequel la forme roulable, et de préférence la forme sphérique, de la pâte pour le noyau est fabriquée en combinant deux gouttes de pâte qui ont approximativement la forme de moitiés de formes roulables, telles que des cylindres ou des sphères, de préférence par la coopération de deux cylindres à moules, chacun d'eux contribuant une goutte de pâte ayant une surface extérieure plate arasée et lesquelles gouttes de pâte sont ensuite pressées ensemble par paire avec leur surface extérieure l'une contre l'autre et à la suite de quoi la forme entière roulable ainsi obtenue est poussée ou expulsée hors de son moule dans le cylindre à moules et est transférée sur la plaque de four ou plaque à pâtisserie.

13. Le procédé selon la revendication 11 ou 12, dans lequel la forme de la pâte pour le noyau a approximativement la forme de la moitié d'une forme roulable, tel qu'un demi-cylindre, mais de préférence une demi-sphère, et dans lequel cette forme de pâte est obtenue par l'introduction d'une quantité de pâte dans un moule ayant environ une moitié de forme roulable, de préférence un moule prévu sur un cylindre à moules, suivie par l'arasement à plat d'une quantité de pâte dans le moule, l'enlèvement ou l'expulsion de la forme de pâte du moule et le transfert de la forme de pâte sur la plaque de four ou la plaque à pâtisserie.

14. Le procédé selon la revendication précédente, dans lequel la moitié de la forme roulable cuite est mécaniquement retouchée pour arrondir les coins et pour donner à la moitié de la forme roulable une forme plus roulable, de préférence une forme sensiblement cylindrique, et mieux encore une forme sensiblement sphérique.

15. L'utilisation d'un produit alimentaire selon l'une quelconque des revendications 1 - 6 comme friandise à grignoter, par exemple pendant une visite au cinéma ou dans un bar, après un repas, comme un amuse-gueule, accompagnant une boisson telle que du café ou une boisson rafraichissante, comme un élément décoratif d'un produit de confiserie ou un produit de crème glacée, comme un amuse-gueule pour enfants, comme des dragées ou comme une rapide source d'énergie avant, après ou pendant un effort sportif.
